# FASCICULE DE BREVET EUROPEEN

(11) **EP 3 081 466 B1**
(45) Date de publication et mention de la délivrance du brevet: **09.08.2017**
(21) Numéro de dépôt: 15195187.8
(22) Date de dépôt: 18.11.2015
(51) Int. Cl.: B62H 7/00, B62K 3/00, B62K 9/00, B62K 13/00

(54) **ENSEMBLE D'ELEMENTS PERMETTANT DE CONSTITUER DEUX SORTES D'ENGINS A ROUES POUR ENFANTS**
GESAMTHEIT VON ELEMENTEN, DIE EINEN ZUSAMMENBAU VON ZWEI ARTEN VON FAHRBAREN GERÄTEN FÜR KINDER ERMÖGLICHT
SET OF ELEMENTS FOR FORMING TWO KINDS OF WHEELED VEHICLES FOR CHILDREN

(30) Priorité: 14.04.2015 FR 1553228; 16.10.2015 FR 1559851
(43) Date de publication de la demande: 19.10.2016
(73) Titulaire: ID Development Limited, Tsim Sha Tsui (HK)
(72) Inventeur: MAZOYER, Joseph, 69110 Sainte Foy Les Lyon (FR)
(74) Mandataire: Jeannet, Olivier

(56) Documents cités:
- CN-U- 202 754 075
- DE-U1-202011 001 596
- US-A1- 2014 217 685

## Description

La présente invention concerne un ensemble d'éléments permettant de constituer deux sortes d'engins à roues pour enfants, à savoir un engin de type trottinette et un engin destiné à être chevauché.

Le terme "trottinette" doit être compris de manière large, comme désignant tout type d'engin comprenant une plate-forme munie d'au moins une roue avant, d'au moins une roue arrière et d'une poignée sur l'avant permettant à un enfant de se maintenir sur la plate-forme.

Une trottinette est un engin attractif pour un enfant mais qui doit faire l'objet d'un apprentissage afin d'éviter les chutes. A cet effet, il est connu de prévoir le montage d'un siège amovible sur une trottinette, ce qui facilite cet apprentissage.

Cependant, les trottinettes existantes ne sont pas parfaites du point de vue de cet apprentissage.

De plus, l'engin connu n'est pas facilement adaptable à la taille de l'enfant.

La présente invention vise à remédier à ces inconvénients importants.

Les publications de demande de brevet N° US 2014/217685 A1, CN 202754075 U et DE 20 2011 001596 U1 décrivent des ensembles d'éléments permettant de constituer diverses sortes d'engins à roues pour enfants, qui ne permettent toutefois pas de remédier parfaitement aux inconvénients précités.

L'ensemble d'éléments concerné comprend, de manière connue en soi, une plate-forme, au moins une roue avant, au moins une roue arrière, une poignée comprenant un montant destiné à être relié à l'avant de la plate-forme, et un siège amovible. Ladite poignée est amovible par rapport à la plate-forme, et la plate-forme comprend, du côté de la ou des roues avant, un puits de réception de la portion inférieure du montant que comprend cette poignée, pour le montage de la poignée sur la plate-forme.

La plate-forme comprend un bossage avant.

Selon l'invention:
- le puits débouche au niveau de la partie supérieure de ce bossage ;
- l'ensemble d'éléments comprend un corps de support de siège, dont la partie avant présente une extension avant et une extension arrière définissant entre elles un logement ayant, en creux, une forme correspondant à celle du bossage, de sorte que, après retrait de la poignée par rapport au puits, le corps de support soit apte à être mis en place sur le bossage de façon ajustée, avec application de ladite extension avant contre la partie avant du bossage et application de ladite extension arrière contre la partie arrière de ce bossage ;
- l'ensemble d'éléments comprend des moyens de montage du siège sur ledit corps de support, et
- l'ensemble d'éléments comprend des moyens de fixation d'au moins une desdites extensions à la plate-forme.

L'ensemble d'éléments selon l'invention permet ainsi de constituer soit une trottinette conventionnelle lorsque ladite poignée est montée sur l'avant de la plate-forme, soit un engin apte à être chevauché lorsque le corps de support et le siège sont montés sur la plate-forme. L'application ajustée de ce corps de support sur ledit bossage permet un montage stable de ce corps sur la plate-forme.

Il sera compris que les termes "avant" et "arrière" sont à considérer en référence au sens de déplacement normal de l'engin lorsqu'il est utilisé ; "avant" signifie donc la partie de l'engin située sur l'avant lors de ce déplacement et "arrière" signifie la partie de l'engin située sur l'arrière lors de ce même déplacement.

De préférence, le corps de support comprend, à une extrémité arrière, un puits de forme identique à celui du puits que comprend la plate-forme, apte à recevoir la portion inférieure du montant que comprend la poignée.

L'ensemble d'élément permet ainsi de constituer en outre un engin d'apprentissage, incluant la plate-forme, le corps de support, le siège monté sur ce corps et la poignée reliée à l'arrière de ce corps. Cette poignée permet ainsi à un adulte de contrôler l'utilisation de l'engin par un enfant.

De préférence,
- le corps de support présente une partie de montage du siège qui s'étend depuis ladite la partie avant de ce corps de support en étant inclinée par rapport à cette partie avant, cette inclinaison étant telle que, lorsque le corps de support est monté sur la plate-forme, la partie de montage du siège a une hauteur allant en augmentant en direction de l'arrière de l'engin, et
- lesdits moyens de montage du siège sur la partie de support permettent le montage du siège selon au moins deux positions sur cette partie de support, à savoir une position avant, de hauteur inférieure, et au moins une position arrière, de hauteur supérieure.

L'engin peut ainsi, selon la position donnée au siège, être adapté à la taille de l'enfant, ce siège étant plus bas lorsqu'il est en position avant et plus haut lorsqu'il est en position arrière.

L'inclinaison de ladite partie de montage du siège peut notamment être telle qu'un axe longitudinal de cette partie de support forme, lorsque le corps de support est monté sur la plate-forme, un angle de l'ordre de 20 à 30° avec le plan dans lequel s'étend généralement la plate-forme, c'est-à-dire un plan parallèle à celui contenant les axes des roues.

Selon une autre possibilité, les moyens de fixation d'au moins une desdites extensions sur la plate-forme comprennent :
- une cavité de verrouillage aménagée dans la partie avant du bossage ;
- une cavité de verrouillage aménagée dans ladite extension avant du corps de support, destinée à venir en coïncidence de la cavité de verrouillage que comprend le bossage lorsque le corps de support est engagé sur le bossage ; et
- une clé de verrouillage destinée à être engagée dans les deux cavités de verrouillage et dimensionnée pour s'étendre dans ces deux cavités, de façon à permettre de verrouiller le corps de support en engagement sur le bossage.

Selon une autre possibilité, ces mêmes moyens de fixation comprennent :
- un trou taraudé et une cavité de maintien, dont un est aménagé sur le côté avant du bossage et l'autre sur le côté arrière de ce bossage ;
- un trou aménagé sur l'une des extensions et un plot de maintien aménagé sur l'autre extension, destinés à venir respectivement en coïncidence dudit trou taraudé et en engagement dans ladite cavité de maintien lors du montage du corps de support sur la plate-forme ;
- une vis destinée à être vissée dans ledit trou taraudé.

Le puits peut avoir un axe perpendiculaire au plan dans lequel s'étend généralement la plate-forme, auquel cas la poignée a un montant rectiligne.

Alternativement, le puits est de forme générale cylindrique et a un axe incliné dans un plan vertical avant-arrière de la plate-forme, en direction de l'arrière de cette plate-forme ; la poignée comprend un montant coudé au niveau de sa partie inférieure ; ce coude définit une portion inférieure du montant, de forme générale cylindrique, qui est destinée à être engagée dans le puits avec capacité de pivotement dans ce puits.

Il sera compris que par l'expression "plan vertical avant-arrière", on entend le plan longitudinal de la plate-forme qui est sensiblement perpendiculaire au plan dans lequel s'étend généralement la plate-forme, c'est-à-dire un plan parallèle à celui contenant les axes des roues.

Ainsi, sur l'engin selon cette alternative, la poignée est apte, par pivotement dans le puits, à passer d'une position de dépliage, dans laquelle elle est sensiblement perpendiculaire à la plate-forme, à une position de repliage, dans laquelle elle s'étend le long de la plate-forme.

De préférence, l'ensemble d'éléments comprend en outre un élément allongé apte à être monté sur la plate-forme, transversalement à cette plate-forme, et ayant une longueur telle qu'il dépasse de part et d'autre de cette plate-forme dans cette position de montage.

Les deux parties de cet élément qui dépassent de part et d'autre de la plate-forme sont aptes à former des cale-pieds pour l'enfant chevauchant le siège.

Selon une forme de réalisation possible de l'invention dans ce cas, ladite extension arrière présente une portion d'extrémité libre aplatie apte à prendre appui contre la plate-forme, ledit élément allongé étant destiné à être monté sur la plate-forme entre cette portion d'extrémité libre aplatie et la plate-forme.

Dans ce cas, la plate-forme peut comprendre un trou taraudé de montage dudit élément allongé, cet élément allongé peut comprendre un trou central de montage, et ladite portion d'extrémité libre aplatie peut également comprendre un trou, ces différents trous venant en coïncidence les uns avec les autres dans ladite position de montage et étant aptes à recevoir une vis de montage de l'extension et de l'élément allongé sur la plate-forme.

L'invention sera bien comprise, et d'autres caractéristiques et avantages de celle-ci apparaîtront, en référence au dessin schématique annexé, décrit ci-après ; ce dessin représente, à titre d'exemple non limitatif, une forme de réalisation préférée d'éléments que comprend l'ensemble d'éléments concerné. Dans ce dessin :
la figure 1 est une vue en perspective d'éléments composant cet ensemble d'éléments, selon une première forme de réalisation, ces éléments n'étant pas assemblés ;
la figure 2 est une vue en perspective similaire à la figure 1, de certains de ces éléments, dans un état d'assemblage ;
la figure 3 est une vue en perspective des éléments montrés sur la figure 1, dans un état d'assemblage, avec montage d'une poignée que comprend l'ensemble d'éléments sur l'arrière d'un corps de support que cet ensemble d'éléments comprend également ;
la figure 4 est une vue en perspective desdits éléments, similaire à la figure 3, selon un autre angle ;
la figure 5 est une vue partielle, de côté et en coupe longitudinale, dudit corps de support et d'un siège que comprend l'ensemble d'éléments, en coupe, le siège étant dans une position possible de montage par rapport au corps ;
les figures 6 et 7 sont des vues de l'engin de côté, dans deux positions de montage possibles du siège par rapport audit corps ;
la figure 8 est une vue en perspective d'éléments composant ledit ensemble d'éléments, selon une deuxième forme de réalisation, ces éléments n'étant pas assemblés ;
la figure 9 est une vue partielle de ces éléments, en perspective et à échelle agrandie ;
la figure 10 est une vue de ces éléments en perspective, dans un état d'assemblage, avec montage sur eux d'une poignée que l'ensemble d'éléments comprend également ;
la figure 11 en perspective d'éléments composant ledit ensemble d'éléments, selon une troisième forme de réalisation, ces éléments n'étant pas assemblés ;
la figure 12 est une vue partielle de ces éléments, en perspective selon un autre angle et à échelle agrandie ;
la figure 13 est une vue de la partie avant d'une plate-forme et d'un corps de support que comprend l'ensemble d'éléments, en coupe longitudinale et à échelle agrandie ;
la figure 14 est une vue de la partie avant de la plate-forme similaire à la figure 13, ainsi que, également en coupe longitudinale, de la partie inférieure de ladite poignée ;
la figure 15 est une vue partielle, en perspective, d'éléments faisant partie de cet ensemble d'éléments, dans une position de la poignée par rapport à la plate-forme ;
la figure 16 est une vue partielle, en perspective, de ces éléments dans une autre position ; et
la figure 17 est une vue de ces éléments en perspective, dans un état d'assemblage, avec montage de la poignée sur le corps de support.

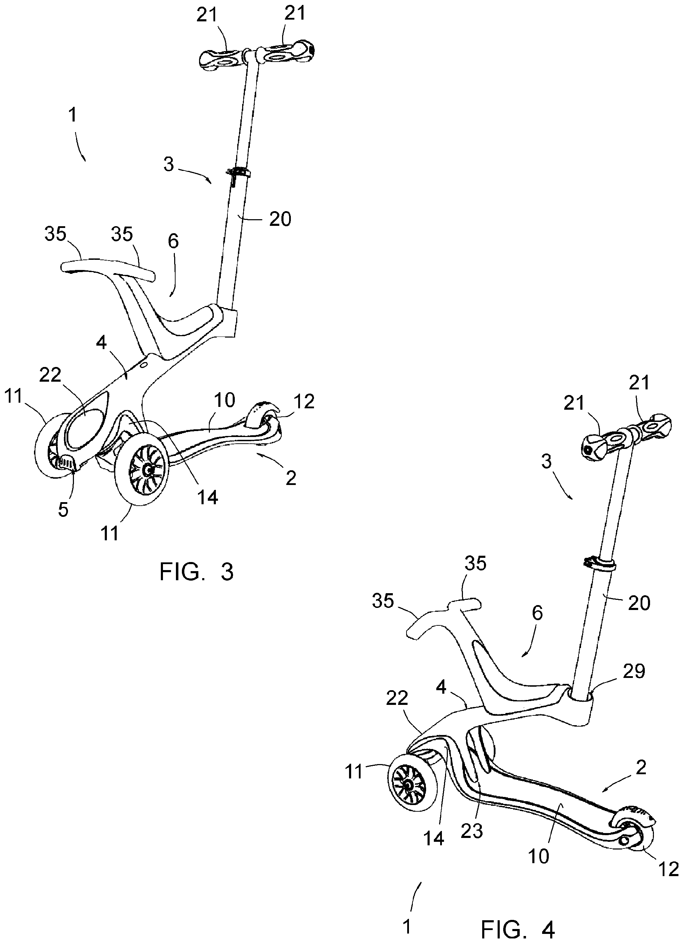

Les figures 3 et 4 représentent un engin à roues 1 destiné à être chevauché par un enfant, formé à partir d'un ensemble d'éléments assemblables. Cet ensemble d'éléments comprend :
   - un sous-ensemble 2 formant la base d'une trottinette ;
   - un sous-ensemble 3 formant une poignée, dit ci-après "poignée" ;
   - un corps de support 4 ;
   - une clé de verrouillage 5, et
   - un siège amovible 6.

Ledit ensemble permet également de constituer un engin de type trottinette, par montage de la poignée 3 directement sur le sous-ensemble 2.

Ce sous-ensemble 2 comprend une plate-forme 10 sur laquelle un enfant peut monter dans la version trottinette de l'engin, comportant, dans l'exemple représenté, deux roues avant 11 et une roue arrière 12.

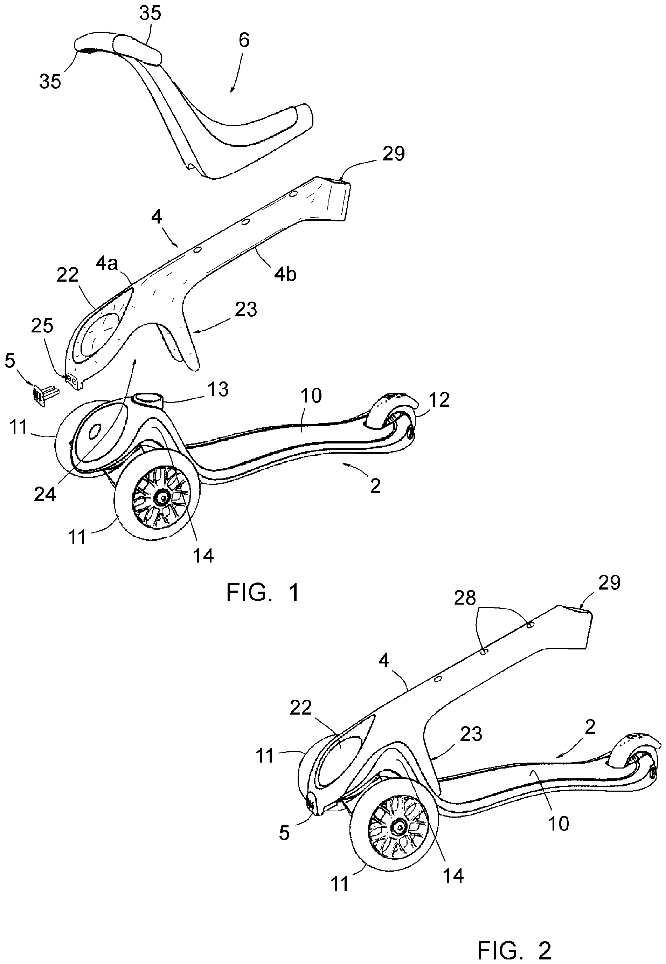

Comme visible sur la figure 1, la plate-forme 10 comprend, au niveau de sa partie avant, un puits de montage 13 et un bossage 14.

Le puits 13 est apte à recevoir une portion d'extrémité inférieure d'un montant 20 que comprend ladite poignée 3. Dans la première forme de réalisation, ce puits 13 a un axe sensiblement perpendiculaire au plan dans lequel s'étend généralement la plate-forme 10, et le montant 20 de la poignée 3 est rectiligne.

Le puits 13 débouche au niveau de la partie supérieure du bossage 14, légèrement sur l'arrière de ce bossage.

Le bossage 14 entoure le puits 13 et comprend, sur son côté situé sur l'avant de l'engin 1, une cavité de verrouillage à double conduits, apte à recevoir avec frottements deux tiges formant le corps de la clé de verrouillage 5 (voir figure 1). Ces frottements permettent de retenir la clé 5 dans cette cavité mais ne font pas obstacle à un retrait de cette clé hors de cette cavité, par action manuelle de retrait de cette clé.

Les autres éléments du sous-ensemble 2 visibles sur les figures (essieu avant ; frein arrière) sont bien connus en eux-mêmes et ne sont donc pas particulièrement décrits.

La poignée 3 comprend, outre le montant 20 précité, une paire de poignées supérieures 21 proprement dites, équipées de garnitures en mousse, qui forment conjointement un guidon.

Le corps de support 4 présente une partie avant 4a et une partie arrière 4b de montage du siège 6.

La partie avant 4a présente une extension avant 22 et une extension arrière 23 définissant entre elles un logement 24 ayant une forme correspondant, en creux, à celle du bossage 14. Ce logement a ainsi une forme ajustée à celle du bossage 14 de sorte que le corps de support 4 est apte à être engagé sur le bossage 14 de façon ajustée, avec application de ladite extension avant 22 contre la partie avant du bossage 14 et application de ladite extension arrière 23 contre la partie arrière de ce bossage 14.

L'extension avant 22 présente une forme élargie venant recouvrir entièrement la face avant du bossage 14. A son extrémité avant, elle comprend une cavité de verrouillage 25 à double conduits, venant en coïncidence avec la cavité homologue que forme le bossage 14 lors du montage du corps 4 sur le sous-ensemble 2. Cette cavité 25 est apte à recevoir avec frottements, tout comme l'autre cavité, les deux tiges formant le corps de la clé de verrouillage 5.

L'extension arrière 23 est formée de deux branches parallèles constituant conjointement un piètement venant prendre appui contre la face arrière du bossage 14 et venant reposer contre la plate-forme 10.

La partie arrière 4b a une forme sensiblement rectiligne et s'étend depuis la partie avant 4a en étant inclinée par rapport à cette partie avant. Comme le montre la figure 2, cette inclinaison est telle que, lorsque le corps de support 4 est monté sur la plate-forme 10, la partie 4b a une hauteur allant en augmentant en direction de l'arrière de l'engin 1. L'angle que fait, dans cette position de montage, l'axe longitudinal de cette partie 4b avec le plan dans lequel s'étend longitudinalement la plate-forme 10 est de l'ordre de 20 à 30 degrés. En d'autres termes, cet axe longitudinal forme un angle de l'ordre de 110 à 120 degrés avec une droite qui s'étend à mi-distance entre l'extension avant 22 et l'extension arrière 23.

La partie arrière 4b comprend trois trous 28 de montage du siège 6, et un puits arrière 29 de montage de la poignée 3.

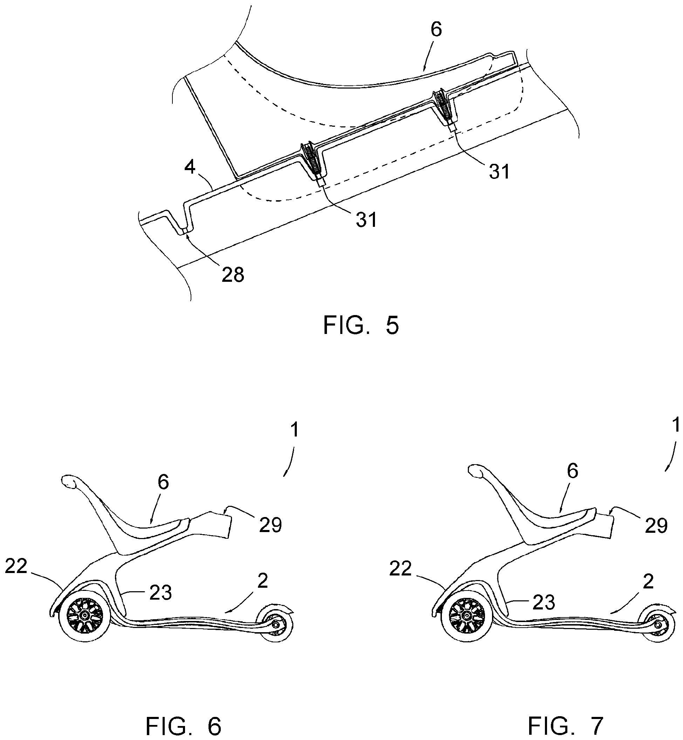

Les trous 28 sont régulièrement espacés. Comme cela est visible sur la figure 5, ils sont aménagés au fond de cavités que forme le corps de support 4 et sont destinés à recevoir des vis 31 coopérant avec des trous taraudés aménagés à la base du siège 6. Ils permettent ainsi le montage de ce siège sur le corps 4 selon une position avant du siège 6, de hauteur inférieure, montrée sur la figure 6, et une position arrière, de hauteur supérieure, montrée sur la figure 7.

Le puits 29 a une forme identique à celle du puits 13 et permet donc le montage de la poignée 3 sur la portion arrière du corps 4, de telle sorte que cette poignée fasse saillie de l'engin 1, vers l'arrière et vers le haut, comme visible sur les figures 3 et 4.

La clé de verrouillage 5 présente une tête de préhension et un corps destiné à être engagé avec frottements dans les deux cavités de verrouillage précitées. La clé 5 permet donc de verrouiller le corps 4 en position d'engagement sur le bossage 14.

Le siège 6 comprend quant à lui, une partie formant une assise pour un enfant et une paire de poignées latérales 35 formant un mini-guidon fixe, grâce auquel l'enfant peut se maintenir sur ce siège.

L'ensemble d'éléments selon l'invention permet ainsi de constituer soit une trottinette conventionnelle lorsque la poignée 3 est montée sur la plate-forme 10, soit un engin de type "mini-moto" lorsque le corps 4 et le siège 6 sont montés sur cette plate-forme 10, soit un engin d'apprentissage lorsque la poignée 3 est montée sur le corps 4, cette poignée 3 permettant alors à un adulte, ayant cette poignée en main, de conserver une maîtrise de l'engin 1 ainsi constitué.

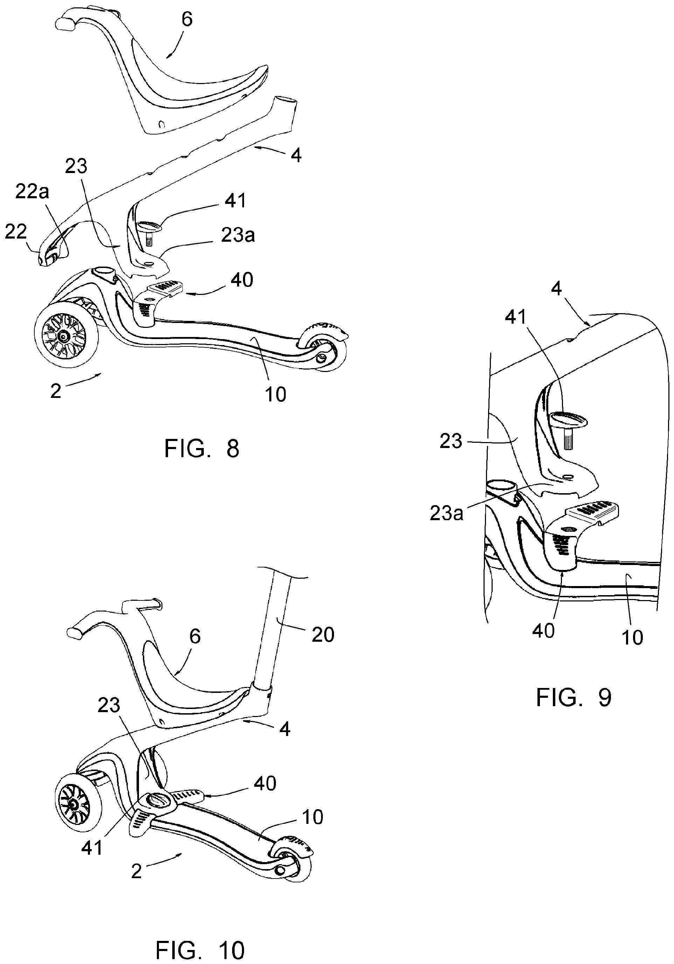

Comme visible sur les figures 8 à 10, l'ensemble d'éléments selon la deuxième forme de réalisation comprend des éléments identiques ou très similaires à ceux de la première forme de réalisation ; par simplification, les éléments déjà décrits, qui se retrouvent dans cette deuxième forme de réalisation, seront désignés par les mêmes références numériques et ne seront pas à nouveau décrits. Il en sera de même pour la troisième forme de réalisation.

Dans cette deuxième forme de réalisation, l'ensemble d'éléments comprend en outre un élément allongé 40 apte à être monté sur la plate-forme 10, transversalement à cette plate-forme, et ayant une longueur telle qu'il dépasse de part et d'autre de cette plate-forme dans cette position de montage. Les deux parties de cet élément 40 qui dépassent de part et d'autre de la plate-forme 10 sont aptes à former des cale-pieds pour l'enfant chevauchant le siège.

L'extension arrière 23 est dans ce cas formée par une branche unique se terminant en une portion d'extrémité libre aplatie 23a apte à prendre appui contre la plate-forme. L'élément allongé 40 est destiné à être monté sur la plate-forme 10 entre cette portion 23a et la plate-forme 10.

Pour ce montage, la plate-forme 10 comprend un trou taraudé; l'élément allongé 40 comprend un trou central de montage, et ladite portion 23a comprend également un trou central de montage. Ces différents trous viennent en coïncidence les uns avec les autres dans ladite position de montage et sont aptes à recevoir une vis 41 de montage de l'extension 23 et de l'élément 40 sur la plate-forme 10.

L'extension avant 22, quant à elle, comprend un plot de calage 22a apte à venir en engagement ajusté dans une cavité correspondante formé par le bossage 14.

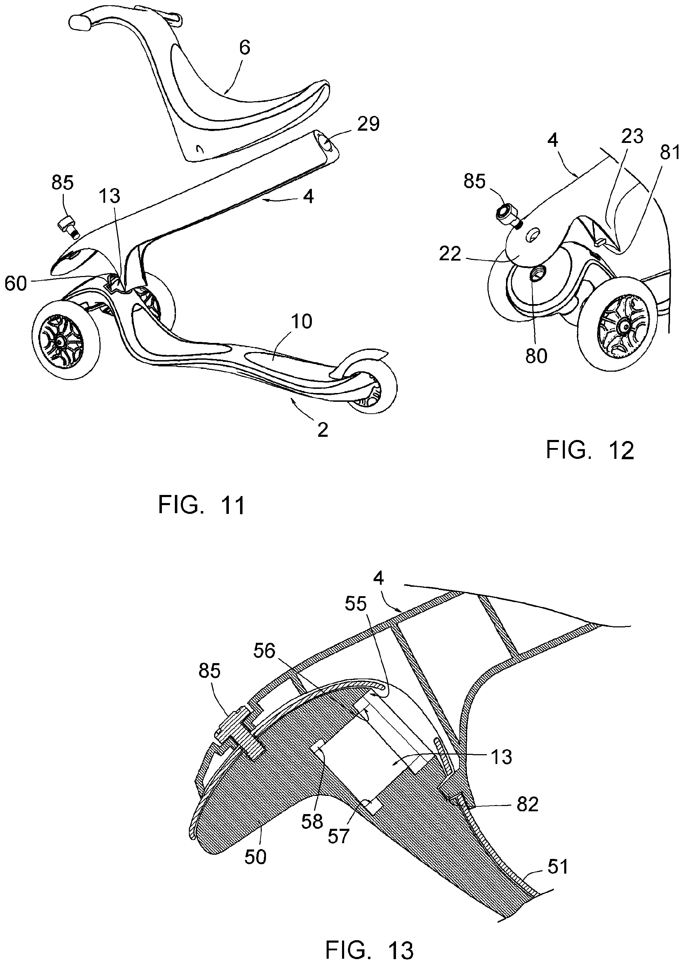

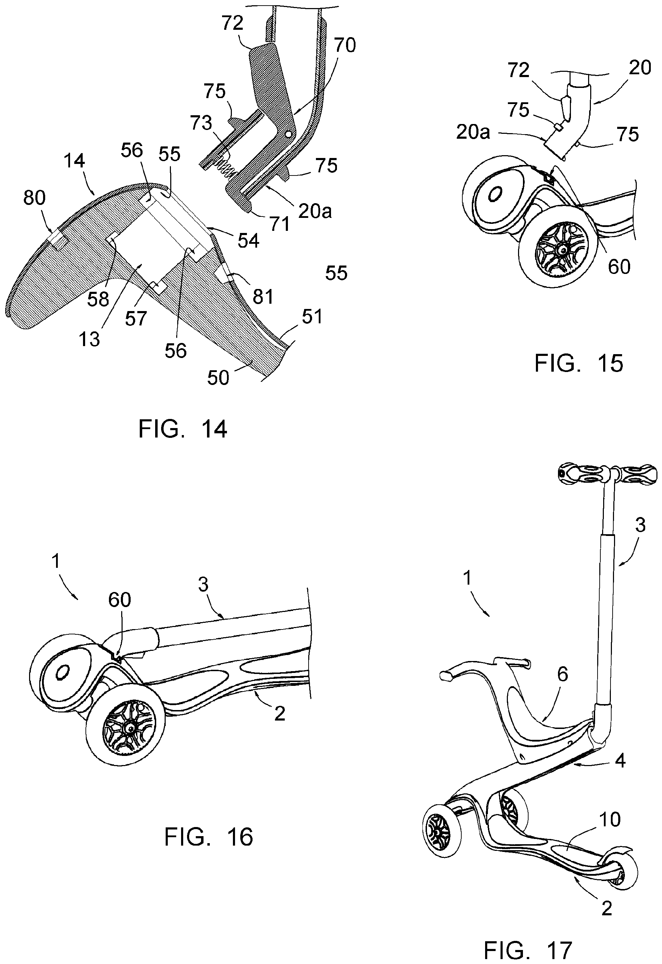

Selon la troisième forme de réalisation montrée sur les figures 11 à 17, le puits 13 a une forme générale cylindrique et un axe incliné dans un plan vertical avant-arrière de la plate-forme 10, cette inclinaison étant en direction de l'arrière de cette plate-forme ; la poignée 3 comprend alors, comme visible sur les figures 14 à 17, un montant 20 qui est coudé au niveau de sa partie inférieure. Ce coude définit une portion inférieure 20a du montant 20, de forme générale cylindrique, qui est destinée à être engagée dans le puits 13 avec capacité de pivotement dans ce puits.

Ainsi, sur l'engin 1 selon cette forme de réalisation, la poignée 3 est apte, par pivotement dans le puits 13, à passer d'une position de dépliage, dans laquelle elle est sensiblement perpendiculaire à la plate-forme 10, à une position de repliage, visible sur la figure 16, dans laquelle elle s'étend le long de la plate-forme 10.

L'inclinaison de l'axe du puits 13 est de l'ordre de 45°, et la portion coudée du montant 20 s'étend sur un arc tel que l'axe de la portion inférieure 20a forme un angle de l'ordre de 135° avec l'axe longitudinal du reste du montant 20.

En référence aux figures 13 et 14, il apparaît que la plate-forme 10 est constituée par un corps structurel 50, dont l'épaisseur permet de former le bossage 14, et par une coque 51, d'épaisseur réduite, permettant un habillage du corps 50.

La coque 51 forme une ouverture 54 en regard du puits 13.

Une gorge 55 est aménagée dans le corps 50 coaxialement au puits 13, à la partie supérieure de ce dernier et juste en dessous de la coque 51. Cette gorge 55 a un diamètre supérieur à celui de l'ouverture 54, de sorte qu'elle est délimitée par la coque 51 en partie supérieure.

La gorge 55 communique, au niveau de sa partie inférieure, avec deux logements radiaux 56 diamétralement opposés l'un à l'autre. Cette gorge 55 et ces logements 56 sont aptes à recevoir deux saillies 75 diamétralement opposées que comprend la portion 20a, comme décrit plus loin.

À la partie inférieure du puits 13, sont aménagés deux logements radiaux 57, 58 diamétralement opposés l'un à l'autre, qui débouchent dans le puits 13.

En outre, la coque 51 forme deux encoches radiales 60 débouchant dans l'ouverture 54 (une seule d'entre elle est visible sur les figures 11 et 15). Les saillies 75 sont aptes à être engagées dans ces encoches 60 puis dans la gorge 55, puis dans les logements 56.

En référence plus particulièrement à la figure 14, il apparaît que la portion inférieure 20a et la portion coudée adjacente logent un organe de verrouillage 70 permettant de commander le montage/démontage et le verrouillage de la poignée 3 sur la plate-forme 10. Cet organe 70 comprend un doigt de verrouillage inférieur 71, une branche intermédiaire et une partie d'actionnement 72. Le doigt 71 forme un angle droit avec la branche intermédiaire et est destiné à être engagé dans l'un ou l'autre des logements 57, 58.

La branche intermédiaire est sollicitée par un ressort 73 s'étendant entre elle et la portion inférieure 20a, qui maintient normalement l'organe 70 dans la position montrée sur la figure 14, dans laquelle le doigt 71 fait saillie radialement au-delà de la paroi de la portion inférieure 20a et est apte à être engagé dans l'un ou l'autre des logements 57 ou 58. Le ressort 73 est cependant apte à être comprimé de telle sorte que le doigt 71 puisse être amené dans une position rétractée dans laquelle il ne fait pas saillie au-delà de la paroi de la portion inférieure 20a et est donc dégagé des logements 57 ou 58.

La partie d'actionnement 72 est coudée par rapport à la branche intermédiaire. Dans la position montrée sur la figure 14, elle fait saillie au travers d'une lumière aménagée dans la portion inférieure 20a et dans ladite portion coudée.

L'organe de verrouillage 70 est monté pivotant par rapport à cette portion inférieure 20a au moyen d'un axe se situant sensiblement entre la branche intermédiaire et la partie d'actionnement 72.

La portion inférieure 20a comprend les deux saillies 75 précitées, solidaires d'elle, qui sont diamétralement opposées l'une à l'autre et qui sont disposées sur un diamètre parallèle à l'axe selon lequel le doigt 71 est mobile par rapport à la portion inférieure 20a.

Comme cela se comprend, la poignée 3 est apte à être séparée de la plate-forme 10 et à être montée sur celle-ci par engagement de la portion inférieure 20a dans le puits 13. Pour réaliser ce montage, la poignée 3 est placée dans une position angulaire intermédiaire entre ses positions de dépliage et de repliage, puis une action manuelle est exercée sur la partie d'actionnement 72 de façon à amener le doigt 71 dans la position rétractée précitée, et la portion inférieure 20a est engagée dans le puits 13. Les saillies 75 sont, dans cette même position angulaire intermédiaire, placées en regard des encoches 60 ; elles sont engagées au travers de ces dernières, puis dans la gorge 55. L'action sur la partie d'actionnement 72 peut être relâchée dès l'engagement des saillies 75 dans les encoches 60, le doigt 71 se portant contre le corps 50 et se trouvant donc maintenu en position rétractée. La poignée 3 est alors pivotée soit vers la position de dépliage, soit vers la position de repliage, et, lorsque l'une ou l'autre de ces positions est atteinte, les saillies 75 tombent dans les et dans les logements 56 et le doigt 71, sous l'action du ressort 73, pénètre dans le logement 57 ou le logement 58 selon le cas, verrouillant ainsi la poignée 3 dans l'une ou l'autre de ces positions.

Pour passer de la position de dépliage à la position de repliage visible sur la figure 16, l'utilisateur exerce une pression sur la partie d'actionnement 72 de façon à amener l'organe de verrouillage 70 dans la position rétractée précitée. En maintenant cette pression, il exerce une traction axiale sur la portion inférieure 20a de façon à extraire les saillies 75 des logements 56 et à amener ces saillies 75 dans la gorge 55. Dans cette position, le doigt 71 est amené au-dessus du logement 57, de sorte que le maintien de ladite pression sur la partie d'actionnement 72 devient inutile, et les saillies 75 viennent en butée contre la coque 51, faisant qu'une extraction non souhaitée de la portion inférieure 20a hors du puits 13 ne peut se produire. La poignée 3 est alors pivotée jusqu'à la position de repliage montrée sur la figure 16, dans laquelle les saillies 75 tombent dans les logements 56 respectifs ; la portion inférieure 20a est ainsi amenée dans la position dans laquelle le doigt 71 est placé en regard du logement 58 et s'engage dans ce logement sous la sollicitation du ressort 73, ce qui verrouille la poignée 3 dans cette position de repliage.

Par ailleurs, dans la troisième forme de réalisation, comme visible sur les figures 13 et 14, le corps 50 forme un trou taraudé 80 sur le côté avant du bossage 14 et une cavité 81 sur le côté arrière de ce bossage. Un trou est aménagé sur l'extension avant 22 et un plot de maintien 82 est aménagé sur l'extension arrière 23 ; ce trou est destiné à venir en coïncidence du trou taraudé 80 dans la position de montage du corps 4 sur la plate-forme 10, et le plot 82 est destiné à venir en engagement dans ladite cavité 81 dans cette même position de montage. Une vis 85 est destinée à être vissée dans le trou taraudé 80, pour assurer le montage du corps 4 sur la plate-forme 10.

L'invention fournit ainsi un ensemble d'éléments 1 modulaires ayant des possibilités d'utilisation étendues, et présentant des avantages déterminants.

L'invention a été décrite ci-dessus en référence à des formes de réalisation fournies à titre d'exemples. Il va de soi qu'elle n'est pas limitée à cette forme de réalisation et qu'elle s'étend à toutes les autres formes de réalisation couvertes par les revendications annexées.

## Revendications

1. Ensemble d'éléments permettant de constituer deux sortes d'engins (1) à roues pour enfants, à savoir un engin de type trottinette et un engin destiné à être chevauché, ledit ensemble comprenant une plate-forme (10), au moins une roue avant (11), au moins une roue arrière (12) une poignée (3) comprenant un montant (20) destiné à être relié à l'avant de la plate-forme (10), et un siège amovible (6),
- ladite poignée (3) est amovible par rapport à la plate-forme (10), et la plate-forme (10) comprend, du côté de la ou des roues avant (11), un premier puits (13) de réception de la portion inférieure du montant (20), pour le montage de la poignée (3) sur la plate-forme (10),
- la plate-forme (10) comprend un bossage avant (14) ;
**caractérisé en ce que** :
- ledit premier puits (13) débouche au niveau de la partie supérieure de ce bossage (14) ;
- l'ensemble d'éléments comprend un corps (4) de support du siège (6), dont la partie avant (4a) présente une extension avant (22) et une extension arrière (23) définissant entre elles un logement (24) ayant, en creux, une forme correspondant à celle du bossage (14), de sorte que, après retrait de la poignée (3) par rapport au premier puits (13), le corps de support (4) soit apte à être mis en place sur le bossage (14) de façon ajustée, avec application de ladite extension avant (22) contre la partie avant du bossage (14) et application de ladite extension arrière (23) contre la partie arrière de ce bossage (14) ;
- l'ensemble d'éléments comprend des moyens (28, 31) de montage du siège (6) sur ledit corps de support (4), et
- l'ensemble d'éléments comprend des moyens (5 ; 41 ; 80 à 85) de fixation d'au moins une desdites extensions (22, 23) à la plate-forme (10).

2. Ensemble d'éléments selon la revendication 1, **caractérisé en ce que** le corps de support (4) comprend, à une extrémité arrière, un deuxième puits (29) de forme identique à celui dudit premier puits (13) que comprend la plate-forme (10), apte à recevoir la portion inférieure du montant (20) que comprend la poignée (3).

3. Ensemble d'éléments selon la revendication 1 ou la revendication 2, **caractérisé en ce que** :
- le corps de support (4) présente une partie (4b) de montage du siège (6) qui s'étend depuis ladite la partie avant (4a) de ce corps de support (4) en étant inclinée par rapport à cette partie avant (4a), cette inclinaison étant telle que, lorsque le corps de support (4) est monté sur la plate-forme (10), la partie (4b) de montage du siège (6) a une hauteur allant en augmentant en direction de l'arrière de l'engin (1), et
- lesdits moyens (28, 31) de montage du siège (6) sur la partie de support (4b) permettent le montage du siège (6) selon au moins deux positions sur cette partie de support (4b), à savoir une position avant, de hauteur inférieure, et au moins une position arrière, de hauteur supérieure.

4. Ensemble d'éléments selon la revendication 3, **caractérisé en ce que** l'inclinaison de ladite partie (4b) de montage du siège (6) est telle qu'un axe longitudinal de cette partie de support (4b) forme, lorsque le corps de support (4) est monté sur la plate-forme (10), un angle de l'ordre de 20 à 30° avec le plan dans lequel s'étend généralement la plate-forme (10), c'est-à-dire un plan parallèle à celui contenant les axes des roues (11, 12).

5. Ensemble d'éléments selon l'une des revendications 1 à 4, **caractérisé en ce que** les moyens de fixation d'au moins une desdites extensions sur la plate-forme (10) comprennent :
- une cavité de verrouillage aménagée dans la partie avant du bossage (14) ;
- une cavité de verrouillage (25) aménagée dans ladite extension avant (22) du corps de support (4), destinée à venir en coïncidence de la cavité de verrouillage que comprend le bossage (14) lorsque le corps de support (4) est engagé sur le bossage (14) ; et
- une clé de verrouillage (5) destinée à être engagée dans les deux cavités de verrouillage et dimensionnée pour s'étendre dans ces deux cavités, de façon à permettre de verrouiller le corps de support (4) en engagement sur le bossage (14).

6. Ensemble d'éléments selon l'une des revendications 1 à 4, **caractérisé en ce que** les moyens de fixation d'au moins une desdites extensions sur la plate-forme (10) comprennent :
- un trou taraudé (80) et une cavité de maintien (81), dont un est aménagé sur le côté avant du bossage (14) et l'autre sur le côté arrière de ce bossage (14) ;
- un trou aménagé sur l'une des extensions (22) et un plot de maintien (82) aménagé sur l'autre extension (23), destinés à venir respectivement en coïncidence dudit trou taraudé (80) et en engagement dans ladite cavité de maintien (81) lors du montage du corps de support (4) sur la plate-forme (10) ;
- une vis (85) destinée à être vissée dans ledit trou taraudé (80).

7. Ensemble d'éléments selon l'une des revendications 1 à 6, **caractérisé en ce que** ledit premier puits (13) a un axe perpendiculaire au plan dans lequel s'étend généralement la plate-forme (10), et **en ce que** ledit montant (20) que comprend la poignée (3) est rectiligne.

8. Ensemble d'éléments selon l'une des revendication 1 à 6, **caractérisé en ce que** ledit premier puits (13) est de forme générale cylindrique et a un axe incliné dans un plan vertical avant-arrière de la plate-forme (10), en direction de l'arrière de cette plate-forme (10) ; la poignée (3) comprend un montant (20) coudé au niveau de sa partie inférieure ; ce coude définit une portion inférieure (20a) du montant (20), de forme générale cylindrique, qui est destinée à être engagée dans ledit premier puits (13) avec capacité de pivotement dans ce premier puits (13).

9. Ensemble d'éléments selon l'une des revendications 1 à 8, **caractérisé en ce qu'**il comprend en outre un élément allongé (40) apte à être monté sur la plate-forme (10), transversalement à cette plate-forme (10), et ayant une longueur telle qu'il dépasse de part et d'autre de cette plate-forme (10) dans cette position de montage.

10. Ensemble d'éléments selon la revendication 9, **caractérisé en ce que** ladite extension arrière (23) présente une portion d'extrémité libre aplatie (23a) apte à prendre appui contre la plate-forme (10), ledit élément allongé (40) étant destiné à être monté sur la plate-forme (10) entre cette portion d'extrémité libre aplatie (23a) et la plate-forme (10).

## Patentansprüche

1. Satz von Elementen, die die Möglichkeit bieten, zwei Arten von Rädervorrichtung (1) für Kinder, d. h. eine Vorrichtung des Roller-Typs und eine Vorrichtung, die dazu bestimmt ist, überlappt zu werden, zu bilden, wobei der Satz von Elementen eine Plattform (10), mindestens eine Vorderrad (11), mindestens ein Hinterrad (12), einen Griff (3) mit einem mit der Vorderseite der Plattform (10) Pfosten (20) verbunden wird und einem abnehmbaren Sitz (6) umfasst;
- der Griff (3) gegenüber der Plattform (10) abnehmbar ist und die Plattform (10) auf der Seite des Vorderrades oder der Vorderrad (11) eine erste Vertiefung (13) zur Aufnahme des unteren Teils des Pfostens (20) aufweist zum Befestigen des Griffs (3) an der Plattform (10);
- die Plattform (10) einen vorderen Vorsprung (14) aufweist;
**dadurch gekennzeichnet, dass**:
- die erste Vertiefung (13) öffnet sich am oberen Teil dieses Vorsprungs (14);
- der Satz von Elementen einen Sitzstützkörper (4) zum Stützen des Sitzes (6) aufweist, wobei der vordere Abschnitt (4a) eine vordere Verlängerung (22) und eine hintere Verlängerung (23) aufweist, die ein Gehäuse (24) zwischen sich definiert, wobei dieses Gehäuse (24) eine der Form des Vorsprungs (14) entsprechende Hohlform aufweist, so dass nach dem Entfernen des Handgriffs (3) gegenüber der erster Vertiefung (13) der Sitzstützkörper (4) auf den Vorsprung (14) mit dem Aufbringen der vorderen Verlängerung (22) gegen den vorderen Abschnitt des Vorsprungs (14) und das Aufbringen der hinteren Verlängerung (23) gegen den hinteren Teil des Vorsprungs (14) passgenau angeordnet wird;
- der Satz von Elementen Befestigungsmittel (28, 31) zum befestigen des Sitzes (6) an dem Sitzstützkörper (4) aufweist und
- der Satz von Elementen Befestigungsmittel (5; 41; 80 bis 85) zum befestigen mindestens eines der Verlängerungen (22, 23) an der Plattform (10) aufweist.

2. Satz von Elementen nach Anspruch 1, **dadurch gekennzeichnet, dass** der Sitzstützkörper (4) an einem hinteren Ende eine zweite Vertiefung (29) aufweist, die eine Form ähnlich der Form der ersten Vertiefung (13) aufweist, die die Plattform (10) aufweist, um den unteren Teil des Pfostens (20) aufzunehmen wird, den der Griff (3) aufweist.

3. Satz von Elementen nach Anspruch 1 oder 2, **dadurch gekennzeichnet, dass**:
- der Sitzstützkörper (4) einen Sitzbefestigungsabschnitt (4b) des Sitzes (6) aufweist, der sich von dem vorderen Abschnitt (4a) dieses Sitzstützkörpers (4) erstreckt und der in Bezug auf diesen vorderen Abschnitt (4a) geneigt ist, wobei diese Neigung ist dass den Sitzbefestigungsabschnitt (4b) des Sitzes (6) eine zunehmende Höhe in Richtung zu hinter des Fahrzeugs (1) aufweist, wenn der Sitzstützkörper (4) auf der Plattform (10) montiert ist
- die Befestigungsmittel (28, 31) zum Befestigen des Sitzes (6) an dem Sitzbefestigungsabschnitt (4b) ermöglichen die Montage des Sitzes (6) in mindestens zwei Positionen auf dem Sitzbefestigungsabschnitt (4b), nämlich einer Vorderseite Position, von geringerer Höhe und mindestens einer Hinterseite Position, von größerer Höhe.

4. Satz von Elementen nach Anspruch 3, **dadurch gekennzeichnet, dass** die Neigung des Sitzbefestigungsabschnitts (4b) des Sitzes (6) derart ist, dass sich eine Längsachse dieses Sitzbefestigungsabschnitts (4b), wenn der Sitzstützkörper (4) an die Plattform (10) angebracht ist, ein Winkel in der Größenordnung von 20 bis 30 ° bildet, mit der Ebene, in der im allgemeinen die Plattform (10) liegt, d.h. eine Ebene parallel zu der, die die Achsen der Räder (11, 12) enthält.

5. Satz von Elementen nach einem der Ansprüche 1 bis 4, **dadurch gekennzeichnet, dass** die Befestigungsmittel mindestens einer der Verlängerungen an der Plattform (10) umfassen:
- einen Verriegelungshohlraum, der in dem vorderen Abschnitt des Vorsprungs (14) angeordnet ist;
- einen in der vorderen Verlängerung (22) des Sitzstützkörpers (4) ausgebildeten Verriegelungshohlraum (25), der so ausgelegt ist, dass er mit dem Verriegelungshohlraum zusammenfällt, den der Vorsprung (14) aufweist, wenn der Sitzstützkörper (4) in Eingriff auf dem Vorsprung (14) steht; und
- einen Verriegelungsschlüssel (5), der dazu bestimmt ist, in die beiden Verriegelungshohlräume eingreifen zu können und so bemessen zu sein, dass er sich in die beiden Hohlräume erstreckt, um es möglich zu machen, den Sitzstützkörper (4) auf dem Vorsprung (14) zu verriegeln.

6. Satz von Elementen nach einem der Ansprüche 1 bis 4, **dadurch gekennzeichnet, dass** die Befestigungsmittel mindestens eines der Verlängerungen auf der Plattform (10) umfassen:
- ein Gewindeloch (80) und einen Haltehohlraum (81), von denen einer auf der Vorderseite des Vorsprungs (14) und der andere auf der Rückseite des Vorsprungs (14) angeordnet ist;
- ein Loch, das an einer der Verlängerungen (22) vorgesehen ist, und einen Haltezapfen (82), der an der anderen Verlängerung (23) vorgesehen ist und dazu bestimmt ist, mit dem Gewindeloch (80) zusammenzufallen und in Eingriff in dem Haltehohlraum (81) bei der Montage des Sitzstützkörpers (4) auf der Plattform (10);
- eine Schraube (85), die dazu bestimmt ist, in das Gewindeloch (80) eingeschraubt zu werden.

7. Satz von Elementen nach einem der Ansprüche 1 bis 6, **dadurch gekennzeichnet, dass** die erste Vertiefung (13) eine Achse aufweist, die senkrecht zu der Ebene liegt, in der die Plattform (10) im allgemeinen liegt, und dass der Pfosten (20) der dem Griff (3) umfasst gerade ist.

8. Satz von Elementen nach einem der Ansprüche 1 bis 6, **dadurch gekennzeichnet, dass** die erste Vertiefung (13) im wesentlichen zylindrisch ist und eine in eine vordere hintere vertikale Ebene der Plattform (10) geneigte Achse nach hinten der Plattform (10) aufweist; der Griff (3) einen Pfosten (20) aufweist, der an seinem unteren Abschnitt gebogen ist; der gebogene Abschnitt einen unteren Abschnitt (20a) des Pfostens (20) definiert, der im allgemeinen zylindrisch ist, der in die erste Vertiefung (13) eingreifen soll, mit der Fähigkeit, in diesem ersten Vertiefung (13) zu schwenken.

9. Satz von Elementen nach einem der Ansprüche 1 bis 8, **dadurch gekennzeichnet, dass** es ein langgestrecktes Element (40) aufweist, das auf der Plattform (10) quer zur Plattform (10) montierbar wird und eine solche Länge aufweist von beiden Seiten der Plattform (10) in einer Einbaulage vorsteht.

10. Satz von Elementen nach Anspruch 9, **dadurch gekennzeichnet, dass** die hintere Verlängerung (23) einen abgeflachten freien Endabschnitt (23a) aufweist, der an der Plattform (10) anliegbar wird, wobei das längliche Element (40) auf der Plattform (10) zwischen diesem abgeflachten freien Endabschnitt (23a) und der Plattform (10) anzubringen ist.

## Claims

1. Set of elements giving the possibility of forming two types of wheeled devices (1) for children, i.e. a device of the scooter type and a device intended to be straddled, the set of elements comprising a platform (10), at least one front wheel (11), at least one rear wheel (12), a handle (3) comprising a post (20) intended to be connected to the front of the platform (10), and a removable seat (6);
- said handle (3) is removable with respect to the platform (10), and the platform (10) comprises, on the side of the front wheel(s) (11), a first well (13) for receiving the lower portion of the post (20), for mounting the handle (3) on the platform (10);
- the platform (10) comprises a front boss (14);
**characterized in that**:
- said first well (13) opens at the upper portion of this boss (14);
- the set of elements comprises a seat supporting body (4) for supporting the seat (6), which front portion (4a) has a front extension (22) and a rear extension (23) defining a housing (24) between them, this housing (24) having a hollow shape corresponding to the shape of the boss (14), so that, after removal of the handle (3) with respect to the first well (13), the seat supporting body (4) is adapted to be placed on the boss (14) snugly, with the application of said front extension (22) against the front portion of the boss (14) and the application of said rear extension (23) against the rear portion of the boss (14);
- the set of elements comprises mounting means (28, 31) for mounting the seat (6) on said support body (4), and
- the set of elements comprises fastening means (5; 41; 80 to 85) for fastening at least one of said extensions (22, 23) to the platform (10).

2. Set of elements according to claim 1, **characterized in that** the seat supporting body (4) comprises, at a rear end, a second well (29) having a shape similar to the shape of the first well (13) which the platform (10) comprises, adapted to receive the lower portion of the post (20) that the handle (3) includes.

3. Set of elements according to claim 1 or claim 2, **characterized in that**:
- the seat supporting body (4) has a seat mounting portion (4b) that extends from said front portion (4a) of this seat supporting body (4) and that is inclined with respect to this front portion (4a), this inclination being such that when the seat supporting body (4) is mounted on the platform (10), the seat (6) mounting portion (4b) has a height increasing toward the rear of the vehicle (1), and
- said mounting means (28, 31) for mounting the seat (6) on the seat mounting portion (4b) allow the mounting of the seat (6) in at least two positions on said seat mounting portion (4b), namely a front position, of lesser height, and at least one rear position, of greater height.

4. Set of elements according to claim 3, **characterized in that** the inclination of said seat mounting portion (4b) is such that a longitudinal axis of this seat mounting portion (4b) forms, when the seat supporting body (4) is mounted on the platform (10), an angle of the order of 20 to 30° with the plane in which lies generally the platform (10), that is to say a plane parallel to that containing the axes of the wheels (11, 12).

5. Set of elements according to one of claims 1 to 4, **characterized in that** the fastening means for fastening at least one of said extensions on the platform (10) comprises:
- a locking cavity arranged in the front portion of the boss (14);
- a locking cavity (25) formed in said front extension (22) of the seat supporting body (4), designed to come into coincidence with the locking cavity that the boss(14) includes when the seat supporting body (4) is engaged on the boss (14); and
- a locking key (5) intended to be engaged in the two locking cavities and dimensioned to extend into the two cavities, so as to make it possible to lock the seat supporting body (4) on the boss (14).

6. Set of elements according to one of claims 1 to 4, **characterized in that** the fastening means for fastening at least one of said extensions on the platform (10) comprises:
- a threaded hole (80) and a holding cavity (81), one of which being arranged on the front side of the boss (14) and the other on the rear side of said boss (14);
- a hole provided on one of the extensions (22) and a holding stud (82) provided on the other extension (23), intended to come in coincidence respectively with said threaded hole (80) and into engagement with said holding cavity (81) when mounting the seat supporting body (4) on the platform (10);
- a screw (85) intended to be screwed into said threaded hole (80).

7. Set of elements according to one of claims 1 to 6, **characterized in that** the first well (13) has an axis perpendicular to the plane within which the platform (10) generally lies, and **in that** said post (20) that the handle (3) comprises is straight.

8. Set of elements according to one of claims 1 to 6, **characterized in that** said first well (13) is generally cylindrical and has an axis inclined in a front-rear vertical plane of the platform (10), towards the rear of the platform (10); the handle (3) comprises a post (20) that is bent at its lower portion; the bent portion defines a lower portion (20a) of the post (20), generally cylindrical, which is intended to be engaged in the first well (13) with the ability to pivot in this first well (13).

9. Set of elements according to one of claims 1 to 8, **characterized in that** it comprises an elongate member (40) adapted to be mounted on the platform (10) transverse to the platform (10), and having a length such that it protrudes from both sides of the platform (10) in an installation position.

10. Set of elements according to claim 9, **characterized in that** said rear extension (23) has a flattened free-end portion (23a) adapted to bear against the platform (10), said elongate member (40) being adapted to be mounted on the platform (10) between this flattened free-end portion (23a) and the platform (10).
